(19) Europäisches Patentamt
European Patent Office
Office européen des brevets

(11) Veröffentlichungsnummer: **0 432 543 B1**

(12) **EUROPÄISCHE PATENTSCHRIFT**

(45) Veröffentlichungstag der Patentschrift: **25.05.94**

(51) Int. Cl.5: **A01N 57/24**, //(A01N57/24, 53:00)

(21) Anmeldenummer: **90122367.7**

(22) Anmeldetag: **23.11.90**

(54) **Insektizide Mittel.**

(30) Priorität: **06.12.89 DE 3940267**

(43) Veröffentlichungstag der Anmeldung:
**19.06.91 Patentblatt 91/25**

(45) Bekanntmachung des Hinweises auf die Patenterteilung:
**25.05.94 Patentblatt 94/21**

(84) Benannte Vertragsstaaten:
**AT BE DE DK ES FR GB IT NL SE**

(56) Entgegenhaltungen:
**EP-A- 0 279 259**
**EP-A- 0 279 325**
**DE-A- 2 658 074**
**DE-A- 2 928 465**
**DE-A- 3 545 060**

(73) Patentinhaber: **BAYER AG**

**D-51368 Leverkusen(DE)**

(72) Erfinder: **Mrusek, Klaus**
**Am Katterbach 66**
**W-5060 Bergisch Gladbach 2(DE)**
Erfinder: **Maurer, Fritz, Dr., Nihon Tokushu Noyaku Seizo K.K**
**Yuki Research Center,**
**9511-4 Yuki**
**Yuki-shi, Ibaraki 307(JP)**

EP 0 432 543 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue insektizide Wirkstoffkombinationen aus Phosphonsäureestern und Pyrethroiden.

Phosphonsäureester und ihre insektizide Wirksamkeit insbesondere gegen Dipteren sind bekannt (vgl. DE-OS 3 704 089).

Pyrethroide und ihre insektizide Wirksamkeit sind bekannt (vgl. DE-OS 2 709 264 entspr. US-P 4 218 469, DE-OS 2 658 074 entsprechend US-P 4 183 950).

Es sind auch Mischungen aus Phosphorsäureestern und Pyrethroiden beschrieben worden (vgl. DE-OS 2 757 769, DE-OS 3 017 638, DE-OS 2 757 768). Diesen Zitaten kann entnommen werden, daß Pyrethroide und Phosphorsäureester sich synergistisch bzw. potenzierend beeinflussen.

In DE-OS 2 928 465 wird erwähnt, daß auch bei Mischungen von Pyrethoriden und bestimmten Phosphonsäureestern eine Potenzierung der Wirkung eintritt. Allerdings werden keine Beispiele für solche Mischungen aus Pyrethroiden und Phosphonsäureestern gegeben. Der potenzierende Effekt wird lediglich anhand von Mischungen aus Pyrethroiden und Phosphorsäureestern gezeigt.

Das Auftreten von resistenten Fliegenstämmen erfordert den Einsatz immer höherer Wirkstoffkonzentration. Es besteht daher Interesse an Wirkstoffen oder Wirkstoffkombinationen die in niedrigen Aufwandmengen gute Wirkung gegen resistente Fliegenstämme zeigen.

Es wurde gefunden:

1. Neue Mischungen aus O-(6-Methoxy-2-tert.-butyl-pyrimidin-4-yl)-O-methylthionoethanphosphonsäurediester der Formel

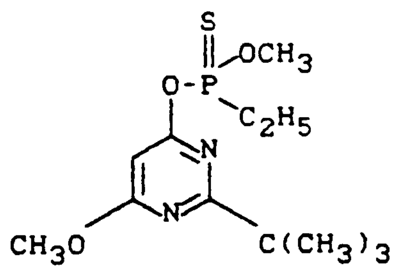

(I)

und 2,2-Dimethyl-3-(2',2'-dichlorvinyl)-cylcopropancarbonsäure-(4-fluor-3-phenoxy)-α-cyanobenzylester (Cyfluthrin) oder 2,2-Dimethyl-3-(2',2'-dichlorvinyl)-cyclopropancarbonsäure-2,3,5,6-tetrafluorbenzylester (Wirkstoff II).

2. Die Verwendung der neuen Mischungen gemäß (1) zur Bekämpfung von Insekten insbesondere von resistenten Fliegen.

Die Kombination dieser Wirkstoffe zeigt dabei überraschenderweise eine Potenzierung ihrer Wirkung die über den rein additiven Effekt hinausgeht.

Die Wirkstoffe sind aus den oben angegebenen Literaturstellen bekannt.

Die Gewichtsverhältnisse der Wirkstoffe zueinander können in relativ breiten Rahmen schwanken. Bevorzugt sind Wirkstoffkombinationen, in denen auf 5-50 Gewichtsteile Wirkstoff der Formel I 1 Gewichtsteil eines der beiden anderen Wirkstoffe entfällt.

Besonders bevorzugt sind Wirkstoffkombinationen aus 5 - 25 Gewichtsteilen Wirkstoff der Formel I und 1 Gewichtsteil Wirkstoff II. Besonders bevorzugt sind Wirkstoffkombinationen aus 10 - 50 Gewichtsteilen Wirkstoff der Formel I und 1 Gewichtsteil Cyfluthrin.

Die Wirkstoffkombinationen eignen sich zur Bekämpfung von Arthropoden, insbesondere von Insekten, die im Haushalts- und Hygienesektor sowie im Vorrats- und Materialschutz aber auch in Landwirtschaft und Forsten vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus

differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp, Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Die erfindungsgemäßen Wirkstoffkombinationen zeichnen sich durch eine hervorragende insektizide Wirksamkeit aus; insbesondere bei der Bekämpfung von resistenten Dipteren, wie z. B. Musca domestica. Ihre Wirkung hält auch auf basischen Unterlagen, wie z. B. auf gekälkten Wänden, sowie auf PVC, Ton, Kacheln, Holz, lackiertem Holz usw., sehr lange an.

Ganz besonders bevorzugt werden die erfindungsgemäßen Wirkstoffkombinationen im Haushalts- und Hygiene-Sektor bei dar Bekämpfung der gegenüber vielen Insektiziden resistenten Dipteren, wie z. B. Musca domestica verwendet.

Die erfindungsgemäßen Wirkstoffkombinationen eignen sich auch zur Bekämpfung von Arthropoden, insbesondere von Insekten, die bei der Haltung landwirtschaftlicher Nutztiere, wie z.B. Rinder, Schafe, Ziegen, Pferde, Schweine, Esel, Kamele, Büffel, Kaninchen, Hühner, Puten, Enten, Gänse, sonstiger Haustiere, wie z.B. Hunde, Katzen und Stubenvögel sowie sog. Versuchstiere, wie z.B. Hamster, Meerschweinchen, Ratten und Mäuse auftreten. Durch die Bekämpfung dieser Insekten sollen Belästigungen und Leistungsminderungen (bei Fleisch, Milch, Wolle, Häuten, Eiern usw.) vermieden werden, so daß durch den Einsatz der erfindungsgemäßen Wirkstoffe eine wirtschaftlichere und einfachere Tierhaltung möglich ist.

Die Anwendung der erfindungsgemäßen Wirkstoffe geschieht im Bereich der Tierhaltung in bekannter Weise durch die Ausbringung geeigneter Formulierungen, z.B. durch Sprühen, Stäuben, Einstreichen der Umgebung der Tiere (z.B. Stallungen) oder gegebenenfalls auch durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw..

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Heißnebel-Formulierungen. Außerdem eignen sich die Wirkstoffe zur Anwendung in hitzeabhängigen und hitzeunabhängigen Verdampfersystemen, wie gekränktes Papier, Pappe, Filz usw..

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdöl fraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,001 und 95 Gewichtsprozent Wirkstoff, vorzugsweise zwischen 0,02 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

In den folgenden Beispielen kamen folgende Wirkstoffe zum Einsatz:

Wirkstoff I

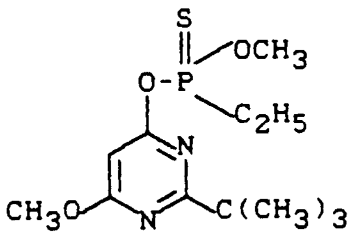

Cyfluthrin

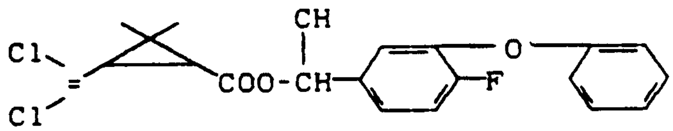

Wirkstoff II

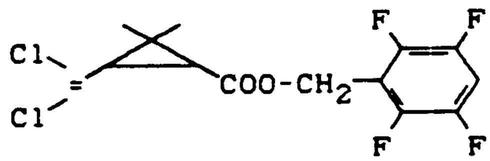

Beispiel A

Aerosolversuche in 1 $m^3$ Kammern

Versuchsmethode

In Prüfkammern aus Glas mit Edelstahlboden der Größe (Innenmaße) 0,84 x 0,87 x 1,37 m = 1 $m^3$ Fassungsvermögen wurden im oberen Drittel des Innenraumes 3 Drahtkörbchen (Länge 7,8 cm, ø 8 cm) mit je 20 Testtieren aufgehängt. Eine bestimmte Menge Wirkstoff wurde in 2 $cm^3$ Aceton gelöst und mit Hilfe einer am Boden der Kammer stehenden Glasdüse mittels Druckluft versprüht.

Ermittelt wurde die Zeit, nach der 95 % der Tiere bewegungslos auf dem Rücken lagen (knock down time = KT 95). Trat die KT 95 innerhalb von 60 Minuten Expositionszeit nicht ein, wurde der Prozentsatz der KD-gegangenen Tiere bestimmt. Sollte zusätzlich die Mortalität ermittelt werden, so wurden die Tiere in sauberen mit Drahtgaze verschlossenen Pappbechern in einen insektizidfreien Raum überführt, erhielten Feuchtigkeit und Zucker, und wurden 24 Stunden später auf % Abtötung getestet.

Aerosolwirkung in 1 cbm Kammern gegen resistente Musca domestica Stamm Hans ♂♂

| Wirkstoff I (mg ai/cbm) | | Wirkstoff II (mg ai/cbm) | 95 % knock down nach Minuten bzw. % knock down nach einer Stunde: 95 % | 1h |
|---|---|---|---|---|
| | | 0,5 | 1h = 0 % | 0 |
| 2,5 | | | 1h = 0 % | 0 |
| 2,5 | + | 0,5 | 1h = 71 % | 71 |
| | | 1 | 1h = 13 % | 13 |
| 5 | | | 1h = 25 % | 25 |
| 5 | + | 1 | 41 ' | 100 |
| | | 2 | 1h = 17 % | 17 |
| 10 | | | 1h = 75 % | 75 |
| 10 | + | 2 | 39 ' | 100 |
| | | 0,5 | 1h = 0 % | 0 |
| 5,0 | | | 1h = 25 % | 25 |
| 5,0 | + | 0,5 | 1h = 58 % | 58 |
| | | 1 | 1h = 13 % | 13 |
| 10 | | | 1h = 75 % | 75 |
| 10 | + | 1 | 42 ' | 100 |

Aerosolwirkung in 1 cbm Kammern gegen resistente Musca domestica Stamm Weymanns ♂♂

| Wirkstoff I | | Wirkstoff II | 95 % knock down nach Minuten bzw. knock down nach einer Stundeund % Mortalität nach 24 Stunden | | |
|---|---|---|---|---|---|
| mg ai/cbm | | | 95 % | 1h | 24h |
| | | 0,1 | 1h = 27 % | 27 | 0 |
| 0,5 | | | 1h = 0 % | 0 | 2 |
| 0,5 | + | 0,1 | 1h = 48 ' | 67 | 16 |
| | | 0,2 | 1h = 75 % | 75 | 7 |
| 1,0 | | | 1h = 0 % | 0 | 6 |
| 1,0 | + | 0,2 | 39 ' | 100 | 83 |
| | | 0,5 | 1h = 92 % | 92 | 54 |
| 2,5 | | | 1h = 0 % | 0 | 37 |
| 2,5 | + | 0,5 | 25 ' | 100 | 100 |
| | | 0,1 | 1h = 27 % | 27 | 0 |
| 1,0 | | | 1h = 0 % | 0 | 6 |
| 1,0 | + | 0,1 | 1h = 57 % | 57 | 65 |
| | | 0,25 | 1h = 80 % | 80 | 8 |
| 2,5 | | | 1h = 0 % | 0 | 37 |
| 2,5 | + | 0,25 | 34 ' | 99 | 99 |

## Beispiel B

### Prüfung auf Residualwirkung

### Versuchsmethode

Um die Wirkung von Wirkstoffen zu ermitteln, wurden verschiedene Unterlagen wie z.B. gebrannter Ton und Sperrholz mit Präparaten, als wettable powder (WP) formuliert, in wäßrigen Suspensionen in bestimmten Aufwandmengen (mg ai/$m^2$] besprüht.

Eine Woche nach Behandlung bis zu 4 Wochen wöchentlich, dannweiter nach 6, 8 Wochen usw. wurden 20 weibliche Stubenfliegen der Art Musca domestica auf die jeweiligen Unterlagen gesetzt. Die Tiere wurden mittels Käfigen aus Drahtgaze (Höhe 2 cm, ø 10,7 cm) auf den behandelten Flächen gehalten und verblieben dort für 24 Stunden.

Die Auswertung auf prozentuale Abtötung erfolgte vom Zeitpunkt des Ansetzens aus gerechnet nach 15 und 30 Minuten, sowie nach einer bis zu 6 Stunden stündlich. Weitere Auswertungen erfolgten nach 8 und 24 Stunden.

Residualwirkung auf verschiedenen Unterlagen

| Musca domestica ♀♀ ♂♂ stamm | Wirkstoff | Formulierungen | Aufwandmenge mg ai/m² | Unterlage | Alter der Beläge in Wochen | 100% Mortalität nach Stunden innerhalb einer 24 stündigen Expositionszeit |
|---|---|---|---|---|---|---|
| Weymanns | Cyfluthrin | 10WP | 30 | Ton | 3 | 24h = 80 % |
| " | Cyfluthrin | 10WP | 30 | " | 4 | 24h = 0 % |
| " | I | 40WP | 1000 | Ton | 3 | 24h = 40 % |
| " | I | 40WP | 1000 | " | 4 | 24h = 0 % |
| " | I + Cyfluthrin | 40WP + 10WP | 500 + 30 | Ton | 3 | 4h |
| " | I + Cyfluthrin | 40WP + 10WP | 500 + 30 | " | 4 | 5h |
| Kretschmer | Cyfluthrin | 10WP | 30 | Ton | 1 | 24h = 30 % |
| " | Cyfluthrin | 10WP | 30 | " | 2 | 24h = 0 % |
| " | I | 40WP | 1000 | Ton | 1 | 24h = 80 % |
| " | I | 40WP | 1000 | " | 2 | 24h = 0 % |
| " | I + Cyfluthrin | 40WP + 10WP | 500 + 30 | Ton | 1 | 1h |
| " | I + Cyfluthrin | 40WP + 10WP | 500 + 30 | " | 2 | 24h |
| " | Cyfluthrin | 10WP | 30 | Holz | 4 | 24h = 0 % |
| " | I | 40WP | 1000 | " | 4 | 24h |
| " | I | 40WP | 1000 | " | 6 | 24h |
| " | I | 40WP | 1000 | " | 8 | 24h = 80 % |
| " | I + Cyfluthrin | 40WP + 10WP | 500 + 30 | Holz | 4 | 1h |
| " | I + Cyfluthrin | 40WP + 10WP | 500 + 30 | " | 6 | 2h |
| " | I + Cyfluthrin | 40WP + 10WP | 500 + 30 | " | 8 | 4h |

## Patentansprüche

1. Schädlingsbekämpfungsmittel gekennzeichnet durch einen Gehalt an O-(6-Methoxy-2-tert.-butyl-pyrimidin-4-yl)-O-methylthionoethanphosphonsäurediester der Formel

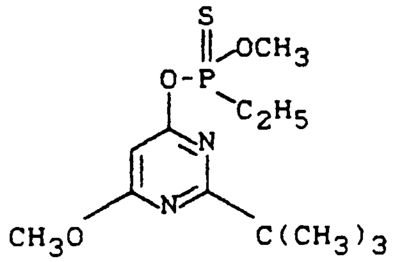

(I)

und 2,2-Dimethyl-3-(2',2'-dichlorvinyl)-cylcopropancarbonsäure-(4-fluor-3-phenoxy)-2-cyanobenzylester (Cyfluthrin) oder 2,2-Dimethyl-3-(2',2'-dichlorvinyl)-cyclopropancarbonsäure-2,3,5,6-tetrafluorbenzylester (Wirkstoff II).

2. Mittel gegen resistente Fliegen, gekennzeichnet durch einen Gehalt an mindestens einer Wirkstoffkombination gemäß Anspruch 1.

3. Verwendung von Wirkstoffkombinationen gemäß Anspruch 1 zur Bekämpfung von Schädlingen.

4. Verfahren zur Bekämpfung von Schädlingen, dadurch gekennzeichnet, daß man Wirkstoffkombinationen gemäß Anspruch 1 auf Schädlinge und/oder ihren Lebensraum einwirken läßt.

5. Verwendung von Wirkstoffkominationen gemäß Anspruch 1 zur Herstellung von Schädlingsbekämpfungsmitteln.

## Claims

1. Pesticide, characterized in that it contains O-(6-methoxy-2-tert.-butyl-pyrimidin-4-yl) O-methyl thionoethanephosphonate of the formula

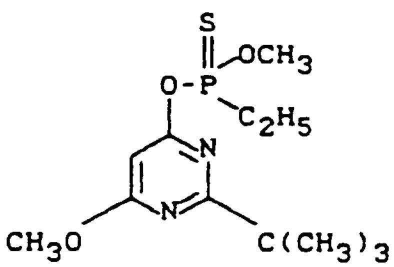

(I)

and (4-fluoro-3-phenoxy)-2-cyanobenzyl 2,2-dimethyl-3-(2',2'-dichlorovinyl)-cyclopropanecarboxylate (cyfluthrin) or 2,3,5,6-tetrafluorobenzyl 2,2-dimethyl-3-(2',2'-dichlorovinyl)-cyclopropanecarboxylate (active compound II).

2. Agent against resistant flies, characterized in that it contains at least one active compound combination according to Claim 1.

3. Use of active compound combinations according to Claim 1 for controlling pests.

4. Method of controlling pests, characterized in that active compound combinations according to Claim 1 are allowed to act on pests and/or their environment.

5. Use of active compound combinations according to Claim 1 for the production of pesticides.

## Revendications

1. Produit parasiticide, caractérisé en ce qu'il contient du thionoéthanephosphonate d'O-(6-méthoxy-2-tert-butyl-pyrimidine-4-yle) et d'O-méthyle, de formule

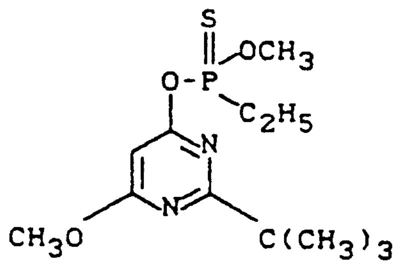

(I)

et du 2,2-diméthyl-3-(2',2'-dichlorovinyl)-cyclopropane-carboxylate de (4-fluoro-3-phénoxy)-2-cyanobenzyle (Cyfluthrin) ou du 2,2-diméthyl-3-(2',2'-dichlorovinyl)-cyclopropane-carboxylate de 2,3,5,6-tétrafluorobenzyle (substance active II).

**2.** Produit contre les mouches résistantes, caractérisé en ce qu'il contient au moins une combinaison de substances actives selon la revendication 1.

**3.** Utilisation de combinaisons de substances actives selon la revendication 1 pour la lutte contre les parasites.

**4.** Procédé pour combattre les parasites, caractérisé en ce que l'on fait agir sur les parasites et/ou leur habitat une combinaison de substances actives selon la revendication 1.

**5.** Utilisation de combinaisons de substances actives selon la revendication 1 pour la préparation de produits parasiticides.